Europäisches Patentamt

European Patent Office

Office européen des brevets

(11) Publication number: 0 343 814
A2

# EUROPEAN PATENT APPLICATION

(21) Application number: 89304768.8

(22) Date of filing: 11.05.89

(51) Int. Cl.4: B60R 25/00

(30) Priority: 20.05.88 GB 8812001

(43) Date of publication of application:
29.11.89 Bulletin 89/48

(84) Designated Contracting States:
AT BE CH DE ES FR GB GR IT LI LU NL SE

(71) Applicant: Leitch, Bramwell Smith
2 Carlton Street Haworth
Keighley West Yorkshire BD22 8JY(GB)

(72) Inventor: Leitch, Bramwell Smith
2 Carlton Street Haworth
Keighley West Yorkshire BD22 8JY(GB)

(74) Representative: Wharton, Peter Robert et al
P. R. Wharton & Co. Alliance House 29-31
Kirkgate
Bradford West Yorkshire, BD1 1QB(GB)

(54) Clamping device.

(57) A wheel clamping device (10) comprises a pair of opposed frames (12, 14) each capable of locating and gripping opposite sides of a wheel and tyre asssembly, the frames each having a front facing portion (18, 20) in the form of plates slidably interengageable with one another, and screw means (26) for drawing the frame members towards one another. The screw means will preferably be lockable either by means of an externally applied padlock connecting a handle (44) thereof the nearest adjacent portion of the frame, or by means of an internally located locking mechanism (48) which serves to prevent rotation of the screw means and therefore the moving of part of the frame mechanisms from one another. The frame members may be tapered so as to accommodate different wheel and tyre sizes and yet nevertheless grippingly engage the tyre when in the locked position. Preferably also, the slideably interengageable plate portions should, in use, completely cover the area of the vehicle wheel nuts and prevent access thereto.

EP 0 343 814 A2

## CLAMPING DEVICE

This invention relates to a clamping device and particularly relates to a clamping device for immobilising the wheels of road vehicles and/trailers.

The theft of caravans is an increasingly serious problem. It has been proposed to prevent or deter thieves by immobilising one or both wheels of a caravan using some form of clamping device. However, none of these has been completely successful. One particular proposal resembles the wheel clamps employed by traffic authorities to immobilise cars parked illegally. This is cumbersome to use and, depending on the wheel size of the caravan in question, often fits only loosely allowing the thief to gain access to the wheel nuts and remove the wheel and clamp completely. Furthermore, modern designs of caravan, in order to increase usable space in the interior, have very low cut wheel arches and there often is not sufficient clearance to fit a large clamping device.

The invention seeks to provide a clamping device suitable for caravans and other road vehicles improved in the above respects.

According to the present invention there is provided a wheel clamping device which comprises a pair of opposed frames each capable of locating and gripping opposite sides of a wheel entire assembly, the frames each having a front facing portion in the form of plates slidably interengageable with one another, and screw means for drawing the frame members towards one another.

The screw means will preferably be lockable either by means of an externally applied padlock connecting a handle thereof the nearest adjacent portion of the frame, or by means of an internally located locking mechanism which serves to prevent rotation of the screw means and therefore the moving of part of the frame mechanisms from one another.

Preferably the frame members are tapered so as to accommodate different wheel and tyre sizes and yet nevertheless grippingly engage the tyre when in the locked position. Preferably also, the slideably interengageable plate portions should, in use, completely cover the area of the vehicle wheel nuts and prevent access thereto.

The invention will be described further, by way of example, with reference to the accompanying drawings, in which:

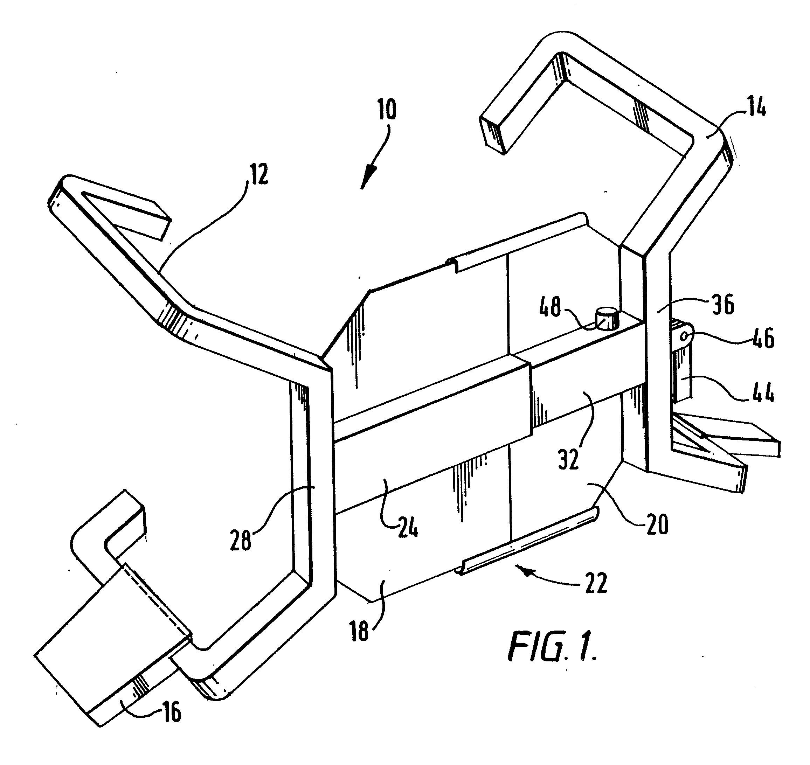

Figure 1 is a diagrammatic perspective view of a wheel clamp in accordance with the invention; and

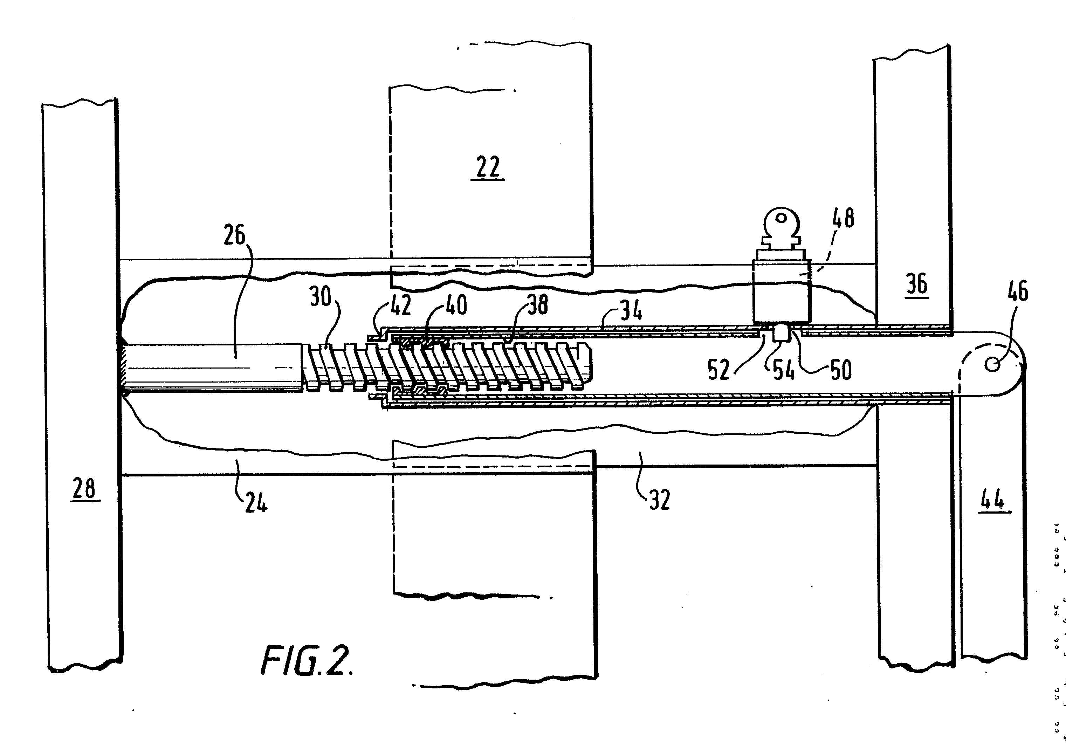

Figure 2 is an enlarged cut-away view of the locking mechanism.

Referring to the drawings, a wheel clamp generally designated 10 comprises a pair of opposed frame members 12, 14 capable of receiving and gripping opposite sides of a wheel and tyre assembly of a road vehicle or trailer. Each frame member 12, 14 is tapered to accommodate different widths of tyre and yet nevertheless ensure gripping engagement therewith. The lowermost portions of the frame members 12, 14 may carry road engaging legs 16. Each frame member 12, 14 carries a portion 18, 20, mutually slideably interengageable, and together forming a front plate 22.

Enclosed within a box 24 welded to the portion 18 is a threaded bar 26 whose plane end is welded to the nearest portion 28 of the frame member 12. The bar 26 preferably carries a square-cut through screw threaded portion 30 over the greater portion of its length.

In a similar box section 32 welded to the portion 20 a piece of square tube 34 is welded to the adjacent portion 36 of the frame 14. The size of the tube 34 is such as to receive and guide the rod 26. Within the tube 34 is a second, round section, tube 38 having a nut 40 welded into the end thereof. The nut 40 bears a female thread interengageable with the thread 30 on the rod 26. The tube 34 carries a collar 42 at its distal end sufficient to prevent the tube 38 from passing therethrough but not to impede access of the rod 26. The tube 38 passes through a hole in the frame portion 36 and, externally of the frame, has a handle 44 rivetted thereto at 46.

A locking mechanism is provided in the form of a lock barrel 48 located in the box 32 above suitably drilled holes 50, 52 in the tubes 34, 38 respectively. The lock is operatedd by simply pressing when a locking pin 54 will pass through the aligned holes 50, 52. In order to remove the pin 54 and thereby allow the tube 32 to be rotated, a key must be employed.

In operation the lock barrel 48 is operated to withdraw the pin 54 and the tube 38 screwed anti-clockwise by means of the handle 44 till the nut 40 disengages the thread 30 of the rod 26. The two halves of the unit 10 may then be pulled apart. In order to clamp the wheel of a vehicle, for example a caravan, each frame 12, 14 is offered one on either side to a wheel and tyre assembly and the portions 18, 20 brought into register when the box 32 will slide within the box 34 causing the rod 26 to enter the guide tube 34. Rotating the handle 44 of the tube 38 will cause the tube to move along the guide tube 34 until the nut encounters the threaded end 30 of the rod 26. The nut will screw along the threaded end until it encounters the collar 42 at the end of the guide tube 34. Further rotation of the hand tube 38 will draw the two frame members 12, 14 together, the plate portions 18, 20 sliding over one another, until the opposite frame portions 12, 14 grip the tyre of the wheel and tyre assembly being clamped. The handle 44 is then rotated up to half a turn in either direction until the holes 52 and 50 line up after which the lock barrel 48 can be operated causing the pin to lock the tube 38 against further rotation. At this point, without the key, the device cannot be tightened further or removed from the wheel. Removal is a simple reversal of this procedure.

The device of the invention has several advantages over current wheel clamping proposals. Being in two halves, each half can be threaded in independently into a confined space, such as the low cut wheel arch of a modern caravan. Once in place the two halves are fitted together and locked. The tapering design of the frame members 12, 14 ensures that the tyre is firmly gripped whatever the size of wheel (within wide limits) employed. This has an additional benefit that if attempts are made to break the device, for example by repeated blows of a hammer, this is considerably less effective than it would otherwise be since the tyre, being resilient, absorbs a great deal of the energy. The rivet 46 is designed to be weaker than the locking pin 54 so that an attempt to force the device by applying excessive leverage to the handle 44 will result in the handle breaking off rather than the lock breaking. As a secondary, or alternative means of locking the handle 44 may be padlocked to the frame member 14.

The clamp of the invention is simple, inexpensive and efficient in use and acts as an efficient deterrent against theft of a vehicle employing it.

## Claims

1. A wheel clamping device which comprises a pair of opposed frames each capable of locating and gripping opposite sides of a wheel and tyre asssembly, the frames each having a front facing portion in the form of plates slidably interengageable with one another, and screw means for drawing the frame members towards one another.

2. A device as claimed in claim 1 in which the screw means is lockable by means of an externally applied padlock connecting a handle thereof the nearest adjacent portion of the frame.

3. A device as claimed in claim 1 in which the screw means is lockable by means of an internally located locking mechanism which serves to prevent rotation of the screw means, and therefore the movement of the frame member from one another.

4. A device as claimed in any of claims 1 to 3 in which the frame members are tapered so as to accommodate different wheel and tyre sizes and yet nevertheless grippingly engage the tyre when in the locked position.

5. A device as claimed in any of claims 1 to 4 in which the slideably interengageable plate portions, in use, completely cover the area of the vehicle wheel nuts and prevent access thereto.

FIG.1.

FIG.2.

EP 0 343 814 A2